# EUROPEAN PATENT APPLICATION

(11) **EP 1 470 877 A1**
(43) Date of publication of application: **27.10.2004**
(21) Application number: 03734614.5
(22) Date of filing: 27.01.2003
(51) Int. Cl.: B22F 1/00

(54) **MICRO-POROUS NOBLE METAL MATERIAL AND METHOD FOR PREPARATION THEREOF**

(30) Priority: 31.01.2002 JP 2002023966
(71) Applicant: Japan Science and Technology Agency, Kawaguchi-shi, Saitama 332-0012 (JP)
(72) Inventor: ASAI, Michihiro, Ichihara-shi, Chiba 299-0127 (JP); Kanon, Hirofumi, Chiba-shi, Chiba 263-0043 (JP); KANEKO, Katsumi, Ichihara-shi, Chiba 299-0117 (JP)
(74) Representative: Müller-Boré & Partner Patentanwälte
(86) International application number: PCT/JP2003/000715
(87) International publication number: WO 2003/064081

(57) **Abstract**

An aggregate of silica particles, which has a primary particle size within a nanometer range, is used as a molecular mold (a dispersion medium). A noble metal compound is adsorbed to the nano-silica aggregate with nanometer order distribution and then reduced to a metallic state. Thereafter, silica particles are dissolved. A noble metal porous body produced in this way has a nano-pore structure with a large specific surface area. The nano-pore structure involves nano-pores as traces of silica particles therein, so as to effectively realize intrinsic activity of a noble metal such as Pd, Pt or Rh. The porous noble metal is useful as functional elements, e.g. catalysts, adsorbents, gas-occluding elements and permselective membranes.

## Description

### INDUSTRIAL FIELD OF THE INVENTION

The present invention relates to a noble metal porous body with high surface activity useful as various functional elements, e.g. catalysts, adsorbents, gas-occluding elements and permselective membranes, and also relates to a method of producing such a porous body.

### BACKGROUND OF THE INVENTION

Activated carbon has a pore structure capable of drawing material in pores, regardless inactivity of carbon itself. Due to the characteristics of the pore structure, the active carbon has been used as a catalyst in a reactive system such as rapid reduction of nitrogen oxide. The feature is originated in a nano-pore structure. If such a nano-pore structure is realized in a noble metal body, e.g. **Pt**, **Pd** or **Rh**, instead of carbon, it is estimated to provide a small-sized element with high functionality due to high catalytic-activity of the noble metal.

Platinum black and palladium black are well-known as noble metal material with a large specific surface area, but the specific surface area of platinum black or palladium black is fairly smaller than that of activated carbon. For instance, platinum black, which is prepared from a platinum compound precipitated by addition of a reducing agent to a platinum solution, has a specific surface area of 30 mm²/g or so.

A method of producing a composite of a chemical species (e.g. an atom, ion or molecule) with a macromolecule or an oxide of such a chemical species is also proposed, wherein the chemical species is dispersed in a macromolecular matrix and sintered at a high temperature. However, there are no reports, which refer to applicability of such a method to production of a noble metal porous body.

Another method for production of a noble metal porous body is disclosed **in Chemical Communication, vol. 12** (1999) pp. **391-392**, wherein an inorganic or organic adsorbent is used as a molecular mold. After a noble metal source in an atomic, ionic or molecular state is adsorbed to the adsorbent, the adsorbent is vanished or decomposed by high-temperature sintering. However, coalescence of noble metal atoms is unavoidable during the high-temperature sintering, so that a nano-pore structure is hardly realized in a sintered body.

In order to enhance functionality of a noble metal porous body, its activity shall be raised by formation of a nano-pore structure. For instance, there is a demand for provision of a noble metal body with a nano-pore structure in various industrial fields, e.g. hydrogen-storage elements and fuel cells aimed at miniaturization with high performance. If such a nano-pore structure is realized in a separator of a fuel cell, processing performance is remarkably improved. If a **Pd** or **Pt** alloy useful as a hydrogen-occluding element is reformed to such a nano-pore structure, a large volume of hydrogen can be stored in a relatively small amount of the noble metal due to a remarkable increase of a specific surface area.

### SUMMARY OF THE INVENTION

The present invention aims at provision of a noble metal porous body, which exhibits an exceptionally high surface activity due to a nano-pore structure effective for performance of an intrinsic activity of a noble metal such as **Pt**, **Pd** or **Rh**. An object of the present invention is to form such a nano-pore structure using a nano-silica aggregate as a molecular mold (i.e. an adsorbent).

The present invention proposes a noble metal porous body, which is produced by reduction of a noble metal compound adsorbed to a nano-silica aggregate with nanometer order distribution. Nano-pores, which are present in the noble metal body, are originated in traces of silica particles. The noble metal may be one or two of **Pd**, **Pt** and **Rh**.

The noble metal porous body is produced by adsorbing a noble metal compound to a nano-silica aggregate with nanometer order distribution, reducing the noble metal compound to a metallic state and then dissolving the nano-silica particles. The noble metal compound may be one or more selected from organic and inorganic salts of **Pd**, **Pt** and **Rh**.

### BRIEF DESCRIPTION OF THE DRAWINGS

**Fig. 1** is a **FE-SEM** (Field Emission Scanning Electron Microscope) image showing a morphology of a metallic palladium/nano-silica composite.
**Fig. 2** is another **FE-SEM** image showing a morphology of a metallic palladium/nano-silica composite.
**Fig. 3** is a graph showing a nitrogen adsorption isotherm of a palladium porous body detected by a volumetric method.
**Fig. 4** is a graph showing energy distribution of a palladium porous body by XPS (X-ray Photoelectron Spectroscopy) analysis.

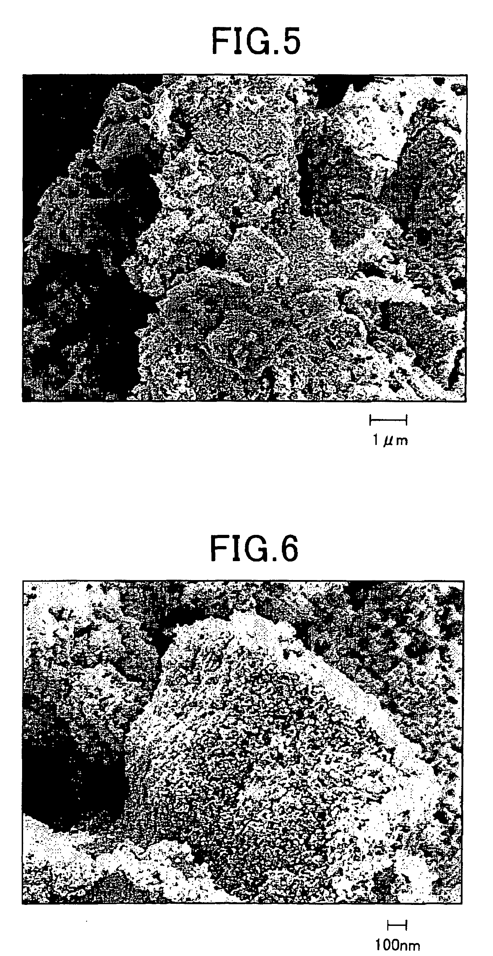

**Fig. 5** is a **FE-SEM** image showing a morphology of a metallic platinum/nano-silica composite.
**Fig. 6** is another **FE-SEM** image showing a morphology of a metallic platinum/nano-silica composite.

### BEST MODES OF THE INVENTION

The present invention uses an aggregate of nano-silica particles with comparatively few pores as a molecular mold. A noble metal compound is adsorbed to the molecular mold with nanometer order distribution, and then reduced to a metallic state.

The nano-silica is provided by a dry process, a wet process or a sol gel process.

Dry silica, so-called "fumed silica", is generally synthesized by burning silicon tetrachloride with an oxy-hydrogen flame. Its specific surface area is conditioned to a value within a range of 50-500 m²/g by controlling manufacturing conditions. Its primary particle size is supposed to be a value within a range of 5-500 nm from the specific surface area. The dry silica is commonly offered as an aggregate of 1 µm or more in secondary particle size.

Wet silica, so-called "white carbon", is representatively prepared by a precipitation method, wherein a sodium silicate solution is neutralized with a mineral acid so as to precipitate silica in the solution. Gel-derived silica, which is prepared by neutralization of sodium silicate with an acid, also belongs to the wet silica. The wet silica is commonly offered as powder by filtering, washing, drying and optionally milling the neutralization product. Available wet silica has an average particle size within a range of from a few to hundreds nanometers and a specific surface area conditioned to 50-500 m²/g by control of manufacturing conditions. Namely, primary particles of 3-50 nm are probably aggregated together during synthesis.

A nano-silica aggregate is also prepared by a sol gel process, wherein a silicon alkoxide such as tetramethoxysilane or tetraethoxysilane is hydrolyzed in an acidic or alkaline hydrated organic liquid. The sol gel process is suitable for preparation of high-purity silica, since raw material can be purified by distillation regardless consumption of an expensive silicon alkoxide. When hydrolysis is performed in a concentrated acidic or alkaline liquid, silica is synthesized in a bulk state. The bulk silica is reformed to amorphous silica of a few to hundreds µm useful as a nano-silica aggregate.

A molecular noble metal compound is dispersively adsorbed to the nano-silica aggregate as a mold. The nanometer order distribution of the noble metal compound may be explained as follows:

The nano-silica aggregate exhibits both hydrophobic and hydrophilic characters due to presence of many **-OH** groups on its surface, and so preferentially adsorbs water in a state contact with a solvent, which contains both of water and an organic solvent. The adsorbed water forms a liquid membrane on a surface of the nano-silica aggregate at first, when a hydrated noble metal compound dissolved in an organic solvent is held in contact with the nano-silica aggregate.

When the hydrated nano-silica aggregate is vacuum-dried for removal of the organic solvent, the noble metal compound is re-crystallized through the adsorbed water on the nano-silica aggregate. Since recrystallization of the noble metal compound is promoted by the adsorbed water, which exists only on the surface of the nano-silica aggregate, a film of the noble metal compound is formed with a profile, which imitates the surface of the nano-silica aggregate, resulting in nanometer order distribution of the noble metal compound. That is, many **-OH** groups, which are present on the surface of the nano-silica aggregate, interact with the organic solvent and the crystal water, so as to form a molecular film of the molecular noble metal compound, i.e. adsorption of the noble metal compound with nanometer order distribution, after removal of the organic solvent and the crystal water.

The nano-silica aggregate is a coalescent body of nanometer-sized (10-30 nm) primary silica particles. Each primary particle, which has a structure with comparatively few pores, is easily dissolved under a moderate condition by chemical treatment with an alkali such as **NaOH.** In this sense, the nano-silica aggregate is advantageous as a molecular mold in comparison with other aggregates.

Furthermore, the primary silica particles have a quasi-spherical shape free of micropores with anti-blocking, so as to facilitate adsorption of the noble metal compound with nanometer order distribution to a whole surface of the nano-silica aggregate. For comparison, when an active carbon fiber bundle is used as a molecular mold, openings of pores in the fiber bundle are clogged in short time. Once the openings are clogged, the noble metal compound does not invade into the fiber bundle any more.

Adsorption of the noble metal compound with nanometer order distribution is assured by removing gaseous components such as **H**_{**2**} and **H**_{**2**}**O** from the nano-silica aggregate by vacuum-drying and then holding the dried nano-silica aggregate in contact with a noble metal compound-containing liquid. The noble metal compound may be one or more of organic and inorganic salts of **Pd**, **Pt** and **Rh**. For instance, when the nano-silica aggregate is vacuum-impregnated with a palladium acetate solution, the palladium acetate solution penetrates into pores of the nano-silica aggregate, and palladium acetate is adsorbed to a surface of each silica particle.

When the nano-silica aggregate, to which the noble metal compound is adsorbed with nanometer order distribution, is heated, the noble metal compound is pyrolyzed to a metallic state. In fact, the noble metal compound is decomposed to a metallic state by heating the nano-silica aggregate in a vacuum atmosphere at a temperature higher by 50°C or so than a pyrolysis temperature of the noble metal compound at an ordinary pressure. During pyrolysis of the noble metal compound, reductive reaction occurs around adsorbed water just on a surface of the nano-silica aggregate. As a result, a molecular film of the noble metal compound, which imitates a surface profile of the nano-silica aggregate, is converted as such to a metallic state.

After reduction of the noble metal compound, the nano-silica aggregate is subjected to chemical treatment with an alkali such as **NaO**H, **KOH** or aqueous ammonia for dissolution of silica particles. Consequently, a noble metal body with a nano-pore structure, wherein nano-pores are formed at traces of silica particles, is produced. Since the nano-silica aggregate is used as a molecular mold (in other words, an adsorbent), it is advantageous to facilitate dissolution of the molecular mold under a moderate condition with an alkali.

The noble metal porous body, which is obtained after dissolution of the nano-silica aggregate, involves nano-pores corresponding to silica particles and also much finer pores therein. It is useful as high-functional elements in various industrial fields, e.g. catalysts, adsorbents, gas-occluding elements and permselective membranes, due to its peculiar nano-pore structure effective for realization of intrinsic activity of a noble metal such as **Pt**, **Pd** or **Rh**.

The other features of the present invention will be more clearly understood from the following examples, however these examples do not put any restriction on a scope of the present invention.

### Example 1

Silica (offered as "fine seal X-37" by Tokuyama Corporation) of 20 µm in averaged primary particle size with purity of 94.43 % was weighed, and 184 mg silica was put in a vacuum vessel. The silica was heated 2 hours at 150°C in a vacuum atmosphere of 0.133 Pa to vanish adsorbed water and gaseous components from surfaces of silica particles. Thereafter, a palladium acetate solution, which was prepared by dissolving 987 mg palladium acetate in 30 ml acetone, was poured in the vacuum vessel and stirred 2 days in an open air so as to adsorb palladium acetate to silica particles.

After 2 days-stirring, the vacuum vessel was held as such at a room temperature and then re-evacuated for vaporization of acetone (as a solvent). The re-evacuation was continued 6 hours, so as to concentrate and exsiccate the nano-silica aggregate impregnated with palladium acetate.

Palladium acetate was reduced to metallic palladium by heating the dry nano-silica aggregate in a vacuum atmosphere at a heating temperature of 250°C higher than a pyrolysis temperature (200°C) of palladium acetate. The heat-treatment was continued 2 hours for complete reduction of palladium acetate.

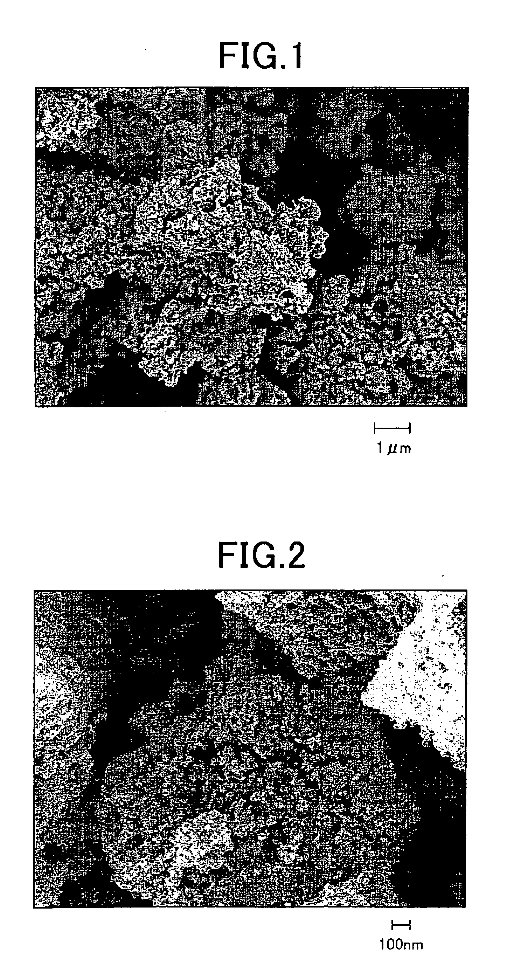

When a surface of the obtained metallic palladium/nano-silica composite was observed by **FE-SEM**, an aggregate, which comprised primary particles of 15-25 nm in size, was detected. Metallic palladium, which was adsorbed to a surface of each silica particle without filling pore spaces, was noted, as shown in **Figs. 1** and **2**.

The metallic palladium/nano-silica composite was dipped in a 1.0 N-**NaOH** solution and subjected as such to 7 days-stirring for dissolution of the nano-silica aggregate. Thereafter, the metallic palladium was washed with deionized water and held 24 hours at 60°C for vaporization of water. Thus, a dry sample 278 mg was produced at a yield ratio of 60%.

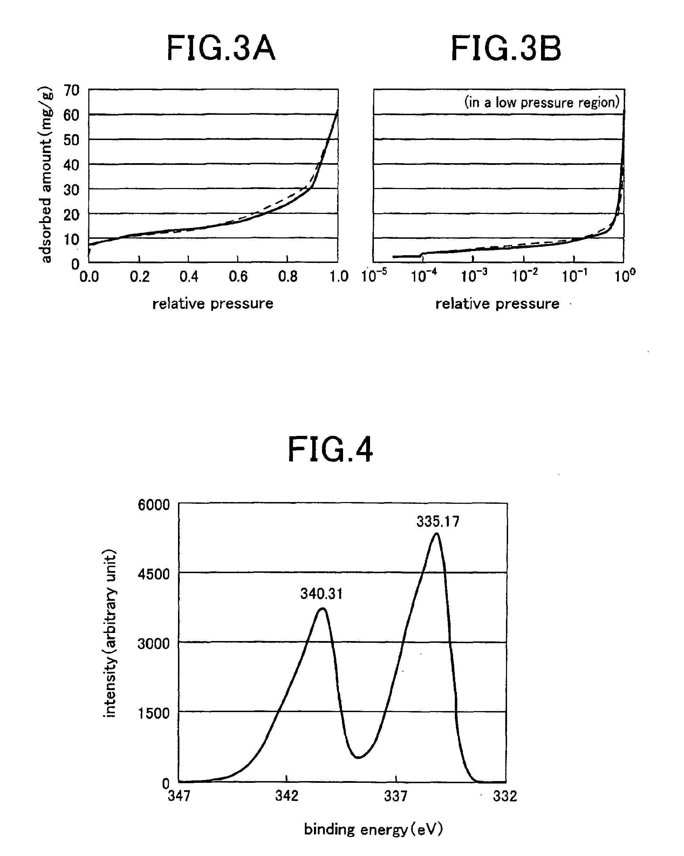

An adsorbing rate of nitrogen to the dry sample was measured by a volumetric method. Results are shown as a nitrogen adsorption isotherm in **Fig. 3**. It is noted that the adsorbing rate rises with steep inclination at a low relative pressure. The steep inclination derives from a nano-pore structure of the dry sample, but does not appear in conventional palladium black. **BET** (Brunauer-Emmett-Teller) analytical results proved that the dry sample was a porous body with a specific surface area of 29.6 m²/g.

The dry sample had peaks at 340.32 eV and 335.17 eV without any peaks originated in Si according to **XPS** analysis, as shown in **Fig. 4**. Since the values of 340.32 eV and 335.17 eV correspond to 340 eV (3d3/2) and 335 eV (3d5/2), respectively, of metallic palladium, the **XPS** analytical results means conversion of palladium to a metallic state.

The above results prove that the dry sample is a palladium body with a nano-pore structure, which imitates a structure of the nano-silica aggregate.

### Example 2

The same silica (370 mg) as in **Example 1** was subjected to vacuum drying for removal of adsorbed water and gaseous components, vacuum impregnated with a solution, which was prepared by dissolving 4.9 g platinum chloride hexahydrate in 30 ml acetone, and stirred 48 hours to adsorb the platinum chloride hexahydrate to silica particles. Thereafter, the impregnated silica was conditioned to a dry platinum chloride hexahydrate/nano-silica aggregate by 6 hours-vacuum suction at a room temperature for removal of acetone.

The dry aggregate was heated 2 hours at 450°C in a vacuum atmosphere, so as to convert platinum chloride hexahydrate to metallic platinum by pyrolysis. Adsorption of metallic platinum to each silica particle without filling pore spaces was recognized by **FE-SEM** observation of the heated aggregate.

The metallic platinum/nano-silica aggregate was then dipped 7 days in a 0.1 **N-NaOH** solution for dissolution of silica particles, washed with distilled water and dried 24 hours at 60°C. Thus, 1.585 g a platinum porous body was produced at a yield ratio of 86.3%. The platinum porous body had a specific surface area of 150 m²/g (i.e. 5.8 times higher than conventional platinum black, which is a representative platinum compound) according to a volumetric method at -196°C. The higher specific area means that the platinum porous body had a nano-pore structure.

### Example 3

The porous noble metal bodies prepared by **Examples 1** and **2** were evaluated by hydrogenation of ethylene as follows: 10 mg each of the noble metal body of **Example 1**, the noble metal body of **Example 2** and platinum black were individually put in quartz tubes. A gaseous mixture of ethylene and hydrogen at a ratio of 1:1.8 was fed into each quartz tube, which was held at 0°C, at a flow rate of 50 ml/minute. After the gaseous mixture was reacted with the fillers, a reaction product was analyzed by gas chromatography. Analytical results show that hydrogenation of ethylene to ethane was promoted in any case. However, the inventive noble metal bodies exhibited activity, which was judged from a volume of the reaction product, fairly superior to activity of platinum black, as shown in **Table 1**.

**Table 1:**

| Activity of Porous Bodies evaluated by Hydrogenation of Ethylene | | | |
|---|---|---|---|
| Kind of Porous Body | A **Pd** porous body (Ex. 1) | A **Pt** porous body (Ex. 2) | Platinum black (conventional) |
| Activity (mmol/minute/g) | 25 | 63.2 | 13.1 |

### INDUSTRIAL APPLICATION

The noble metal porous body proposed by the present invention as the above has a nano-pore structure, which derives from traces of nano-silica particles. Due to the peculiar structure, the porous body well exhibits intrinsic characteristics of an active noble metal such as **Pd**, **Pt** or **Rh** suitable for functional elements such as catalysts, adsorbents, gas-occluding elements and permselective membranes. Application of the noble metal porous body to elements using an electric conductive skeletal structure is also estimated due to its electronic state originated in the noble metal. Moreover, the noble porous metal body is produced by a process suitable for mass-production, so that material excellent in functionality can be offered at a low cost.

## Claims

1. A noble metal porous body
comprising a noble metal, which is a reduction product of a noble metal compound adsorbed to a nano-silica aggregate with nanometer order distribution; and
involving nano-pores, which derive from nano-silica particles, therein.

2. The noble metal porous body defined by **Claim 1**, wherein the noble metal is one or more selected from the group consisting of **Pd**, **Pt** and **Rh**.

3. A method of producing a noble metal porous body, which comprises the steps of:
providing an aggregate of silica particles, which have primary particle size within a nanometer range;
adsorbing a noble metal compound to said aggregate with nanometer order distribution;
reducing said noble metal compound to a metallic state; and then
dissolving said silica particles.

4. The method defined by Claim 3, wherein the noble metal compound is an organic or inorganic salt of a noble metal selected from the group consisting of **Pd**, **Pt** and **Rh**.
